# EUROPEAN PATENT SPECIFICATION

(11) **EP 2 970 002 B1**
(45) Date of publication and mention of the grant of the patent: **28.10.2026**
(21) Application number: 14764636.8
(22) Date of filing: 14.03.2014
(51) Int. Cl.: C04B 20/10, C04B 20/12

(54) **REINFORCEMENT FIBER COATING COMPOSITIONS, METHODS OF MAKING AND TREATING, AND USES FOR IMPROVED ADHESION TO ASPHALT AND PORTLAND CEMENT CONCRETE**
FASERVERSTÄRKUNGS-BESCHICHTUNGSZUSAMMENSETZUNGEN, VERFAHREN ZUR HERSTELLUNG UND BEARBEITUNG UND VERWENDUNGEN DAVON FÜR VERBESSERTE ASPHALTHAFTUNG SOWIE BETON MIT PORTLANDZEMENT
COMPOSITIONS DE REVÊTEMENT DE FIBRES DE RENFORT, PROCÉDÉS DE FABRICATION ET DE TRAITEMENT, ET UTILISATIONS POUR UNE ADHÉRENCE AMÉLIORÉE À DE L'ASPHALTE ET DU BÉTON DE CIMENT PORTLAND

(30) Priority: 15.03.2013 US 201361787352 P; 15.03.2013 US 201361787418 P
(43) Date of publication of application: 20.01.2016
(73) Proprietor: Forta, LLC, Grove City PA 16127 (US)
(72) Inventor: LOVETT, Jeffrey B., Harrisville, Pennsylvania 16038 (US); MACDONALD, Clifford Norman, Inver Grove Heights, Minnesota55076 (US); BIDDLE, Daniel T., Grove City, Pennsylvania 16127 (US)
(74) Representative: Serjeants LLP
(86) International application number: PCT/US2014/029045
(87) International publication number: WO 2014/144575

(56) References cited:
- EP-A1- 1 083 274
- EP-A2- 0 021 500
- WO-A1-94/19505
- DE-A1- 3 538 115
- JP-A- 2002 274 904
- US-A- 3 318 826
- US-A- 3 318 826
- US-A- 5 460 649
- US-A- 5 552 472
- US-A- 5 552 472
- US-A- 5 741 548
- US-A1- 2003 046 770
- US-A1- 2003 046 770

## Description

### BACKGROUND OF THE INVENTION

### 1. Field of the Invention

This invention relates to a treated reinforcement fiber for use in an asphalt or portland cement concrete composition, and a method for treating a reinforcement fiber. The treated reinforcement fibers provide advantages as compared to non-treated reinforcement fibers including, but not limited to, improved adhesion between the treated reinforcement fibers and, between the treated reinforcement fibers and asphalt and portland cement concrete.

### 2. Background of the Invention

Reinforcement components, such as fibers, are generally known in the art. Further, addition of these reinforcement components to building materials, such as concrete, including asphalt and portland cement concrete and the like, is known to add strength, toughness, and durability to improve the integrity of the material properties of the concrete. For example, a reinforcement component is typically added to concrete to reduce the effect of two main structural deficiencies: 1) low tensile strength and 2) low strain at fracture. The tensile strength of concrete is relatively low because concrete, when formed, normally contains numerous micro-cracks. It is the rapid propagation of these micro-cracks under applied stress that is responsible for the low tensile strength of the material.

Known reinforcement components include, for example, various gauges of wire mesh or reinforcement fibers, such as, asbestos fibers, glass fibers, steel fibers, mineral fibers, natural fibers, synthetic fibers (such as polymer and aramid fibers), and cellulose fibers. Some reinforcement fibers are better suited for particular applications than others. There are disadvantages associated with these known reinforcement components. For example, they generally do not exhibit good adhesion to concrete. Exposure of these reinforcement components to various environmental conditions, such as alkaline media, can cause the reinforcement components to degrade. Some advances have been made in the area of reinforcement components to provide improved adhesion. For example, additive solutions can be added to fiber/concrete mixtures to improve adhesion. However, even with the additive solutions, reinforcement fibers still have disadvantages that weaken or, otherwise, limit their effectiveness.

Furthermore, it is generally known that surface properties of shaped articles such as polymeric films and fibers can be modified by a graft polymerization process. In this process, the article is treated with a free radical generating agent, such as organic peroxide or high energy radiation and then, contacted with an ethylenically unsaturated monomeric material under conditions wherein the monomer or graft polymer chain is covalently bonded to the substrate of the article.

There are, however, disadvantages associated with conventional graft polymerization processes. For example, films formed by these processes can be prone to delamination under certain conditions. In order to improve the integrity of a film deposited on a surface of a substrate, the substrate may be treated to grow a polymer coating using a chemical grafting process. The resulting coating is covalently bonded to the substrate and is resistant to delamination. Chemical grafting involves the activation of the substrate. The substrate is activated which causes chains of monomers linked by carbon-carbon bonds to grow on the substrate. The growth has been characterized as "whiskers". These whiskers can impart desirable properties to the substrate without imparting negative properties to the substrate.

In general, a substrate material possesses certain hydrogen atoms which are more active than the "bulk hydrogen atoms" in the material. Examples of relatively more active hydrogen atoms include the tertiary hydrogen in polypropylene, the amide hydrogen in proteins, and the hydroxyl hydrogen in polysaccharide. The chemical grafting process uses graft initiators which have the capacity to remove the active hydrogen atoms and initiate the growth of polymer chains at the site of the removed hydrogen atoms. This process results in a covalent bond formed between the grafted polymer and the substrate. Further, the process can result in a coating or film chemically grafted, *i.e.,* covalently bonded to the substrate.

Accordingly, there is a need for reinforcement fibers that impart improved structural properties to building materials to which they are added and, in particular, the need exists for treated reinforcement fibers having a coating or film chemically applied thereto such that when the treated reinforcement fibers are added to concrete materials, the result is improved adhesion between the fibers and improved adhesion to the concrete, as compared to untreated reinforcement fibers known in the art. Further, it is desired that application of the coating or film can be carried out with minimal surface preparation of the reinforcement fibers and can result in a relatively thin coating layer on the surface thereof.

JP 2002 274904 A (DIATEX KK) describes a method for preparing cementitious fiber reinforced material. A hydrophilic treatment is described that includes applying a titanate coupling agent to a polymer. Graft polymerization of polar monomers can be carried out in the presence of a radical generator such as peroxide. Monomers are used in combination with conventional graft initiators such as peroxide, and where titanate is used it is only in the context of grafting fully formed polymers (acrylic resin/polyvinyl alcohol, as opposed to monomer or reactive pre-polymer) onto the surface of a substrate for hydrophilic treatment.

### SUMMARY OF THE INVENTION

The present invention provides a treated reinforcement fiber according to claim 1.

The graft initiator may be selected from the group consisting of silver nitrate, silver perchlorate, ferrous ammonium sulfate, titanium and mixtures thereof.

The present invention also provides a reinforced asphalt and portland cement concrete composition according to claim 3.

The present invention further provides a method of treating a reinforcement fiber according to claim 4. Further optional or non-essential features of the method are defined in the dependent claims.

### DETAILED DESCRIPTION OF THE INVENTION

The term "concrete" as used herein and the claims means asphalt and portland cement concrete and the like.

The coating compositions are deposited or applied to a reinforcement fiber substrate to form a coating thereon by employing the mechanism of chemical grafting. In general, chemical grafting includes applying or depositing a graft initiator on the surface of a substrate. In this invention, a graft initiator is applied or deposited on a surface of the reinforcement fibers. The graft initiator may be applied or deposited using various conventional techniques known in the art. The graft initiator exposes active sites on the surface of the substrate causing the surface of the reinforcement fibers to be activated. For example, a hydrogen atom can be abstracted from a hydrogen-containing group giving rise to free radicals. These free radicals initiate graft polymerization. Monomers and/or prepolymers linked by carbon-carbon bonds attach to reactive sites followed by chain propagation, whereby monomer/polymer branches are formed. The growth can be characterized as "whiskers". As a result, a monomeric and/or polymeric treatment coating is formed on the surface of the reinforcement fibers. The monomer and/or polymer coating is chemically, e.g., covalently, bonded to the reinforcement fiber substrate and therefore, without intending to be bound by any particular theory, it is believed that the coating exhibits improved resistance to delamination as compared to conventional surface films or coatings. Further, it is believed that the surface energy of the monomer and/or polymer coating provides for improved adhesion to the concrete as compared to the surface energy of the untreated or uncoated fiber, such that a bond is formed between the treated or coated fiber and the concrete.

When added to asphalt and portland cement concrete compositions, the use of treated reinforcement fibers can provide at least one of the following desirable changes to the asphalt and portland cement concrete when it is field placed and set: (i) increased strength, durability and toughness, and (ii) reduced or minimal formation of cracks over time. Furthermore, the use of treated reinforcement fibers in accordance with this invention can result in improved adhesion between a plurality of treated reinforcement fibers themselves and between the treated reinforcement fibers and the asphalt and portland cement concrete, as compared to the use of untreated reinforcement fibers.

While applying the coating composition to reinforcement fibers may result in improved desirable properties, e.g., improved adhesion, when the treated reinforcement fibers are added to the asphalt and portland cement concrete, the inherent structure, characteristics and properties, of the reinforcement fibers are not otherwise changed as a result of them being treated with the coating composition.

There is a wide variety of reinforcement fibers known in the art which can be used in the invention. Suitable reinforcement fibers for use in the invention include synthetic or natural fibers. Natural fibers can include wood-derivative fibers and mixtures thereof. Synthetic fibers can include, but are not limited to, polymer fibers, aramid fibers and mixtures thereof. Polymer fibers can include, but are not limited to, polyolefin fibers such as polypropylene fibers and polyethylene fibers, polyamide fibers such as nylon fibers, polyvinyl-chloride fibers, polyester fibers and mixtures thereof. In certain embodiments of the invention, the reinforcement fibers include a blend of aramid fibers and polyolefin fibers, such as a blend of aramid fibers, polyethylene fibers and polypropylene fibers.

The reinforcement fibers can be used in various shapes, sizes, and forms. The reinforcement fibers, for example, can be flat, such as in the form of a sheet, or cylindrical, such as in the form of a tube or cord. The reinforcement fibers may include a deformation, such as a one or more crimps, in the flat or cylindrical length of the fiber. The deformation, e.g., crimp(s), can form a fiber having different shapes such as z-shaped, s-shaped, w-shaped and wedge-shaped fibers. In certain embodiments, loose fibers can be difficult to handle, and therefore, it may be desirable to configure and control the fibers, such as to improve the ease of handling, *e.g.,* for adding the fibers to a concrete mixing process. Accordingly, the tubes or cords can be bundled together in a circumferential wrap and cut to a predetermined length using conventional techniques and methods known for cutting fibers. The length of the fibers can vary widely, and the length can be such that the fibers are dispersible in a concrete mixture. In non-limiting embodiments, the fibers may be cut into a length within the range of about 19 to 60 mm.

The fibers, individually or together in various combinations and proportions, can be fibrillated (*i.e.,* pulled apart to form a net like structure) or non-fibrillated. The fibers can be configured in a predetermined number of twists and turns. For example, the fibers suitable for use in the invention can include a fiber component, as disclosed in United States Patent No. 7,168,232 ("the '232 patent"). The fiber component can be a twisted bundle of multiple strands of a non-fibrillating monofilament. The '232 patent further discloses the twisted fiber component with another fiber component, discrete from the twisted fiber component, that is fibrillated. In United States Patent No. 4,346,135, a fibrous reinforcing means, including at least two various groups of fibrous articles, is disclosed. At least one of the groups consists of fibrous articles in the form of a closed filamentary net. In United States Patent No. 6,753,081, a synthetic fiber blend is disclosed. The synthetic fiber blend includes a first fiber component formed of a homopolymer polypropylene fiber, and a second fiber component is a copolymer formed of a polypropylene and a high-density polyethylene.

In accordance with certain embodiments of the invention, the coating composition includes graft initiator and a component which includes at least one of monomer and prepolymer. The monomer can be selected from those known in the art. Suitable monomers include urethane monomers, acrylic monomers, vinyl monomers and mixtures thereof. In certain embodiments, the monomer includes one or more functional groups selected from hydroxyl, carboxyl, amino, ester and mixtures thereof. In certain embodiments, the monomer includes acrylate, such as methacrylate or diacrylate, such as dimethacrylate.

Suitable prepolymers include urethane prepolymers, acrylic prepolymers, vinyl prepolymers and mixtures thereof. In certain embodiments, the prepolymer includes one or more functional groups selected from hydroxyl, carboxyl, amino, ester, acrylic and mixtures thereof. Further, in certain embodiments, the prepolymer is water dispersible.

In certain embodiments, the monomer and/or prepolymer include functionality selected from the groups of acrylate, hydroxyl, carboxyl, epoxy, urethane, amide, amine, anhydride and combinations thereof.

The amount of monomer and/or prepolymer in the composition can vary and can depend on the particular selection of each of these compounds.

In certain embodiments, the coating composition includes either monomer or prepolymer. In certain other embodiments, the coating composition includes a mixture or blend of monomer and prepolymer. In one embodiment, the monomer is an acrylate monomer, such as methacrylate monomer, and the prepolymer is a water dispersible polymer with functional groups, such as carboxyl, hydroxyl, amino and acrylic.

The graft initiators for use in the invention include metal ions, such as but not limited to iron (Fe+++ and Fe++), silver (Ag+), cobalt (Co++), and copper (Cu++). Suitable graft initiators for use in the invention include metallic salts. A wide variety of metallic salts are known in the art. In certain embodiments, the graft initiator is selected from silver nitrate, silver perchlorate, ferrous ammonium sulfate, titanium and mixtures thereof. The graft initiator can be in the form of a solution. The solution can include the graft initiator and water. The amount of graft initiator can vary. The graft initiator is typically present in a low concentration or small amount. In certain embodiments, an amount of from 5 ppm to 10 ppm is used. In certain other embodiments, the graft initiator is present in a concentration ranging from about 0.01 to about 1.0%, or from about 0.001 to about 0.1% by weight based on the total weight of the prepolymer and/or monomer present.

Optionally, the composition can further include catalyst. In general, the catalyst functions to ionize or regenerate the graft initiator. The catalyst can be selected from those known in the art. In certain embodiments, the catalyst is peroxide, including, for example, hydrogen peroxide and other organic peroxide, such as, benzoyl peroxide, methyl ethyl ketone peroxide, 1-butyl hydroperoxide and derivatives and combinations thereof. The catalyst can be employed in various amounts. In certain embodiments, peroxide acid or perbenzoate is used as catalyst. The catalyst can be present in varying amounts. In certain embodiments, the concentration of catalyst ranges from about 0.1 to about 5% or greater, or from about 0.05 to about 1.0%, by weight based on the weight of the composition.

The coating composition is applied to the reinforcement fiber by chemical grafting to produce a reinforcement fiber having a treated or modified surface. The grafting process may be conducted by preparing a grafting solution and applying the grafting solution to the substrate, e.g., reinforcement fiber, by any conventional method known in the art, including but not limited to, brushing, spraying, dipping, spin coating, vapor deposition and the like. The solution may include solvent that is compatible with the reagents selected for the grafting. Solvents are selected depending on the prepolymers and/or monomers employed, and can include polar solvents such as water, water soluble alcohols, ethers, esters, ketones, and derivatives and mixtures thereof, and nonpolar solvents such as organic solvents, e.g., aromatic solvents such as benzene and its derivatives, alkanes and/or alkenes and their derivatives, halogenated organic solvents, and other readily available solvents.

In general, as previously disclosed, a chemical grafting process includes attaching one material to another material by means of a chemical bond, and involves activating a substrate, *e.g.,* a reinforcement fiber, and growing monomers, prepolymers or polymers linked by carbon bonds on the substrate.

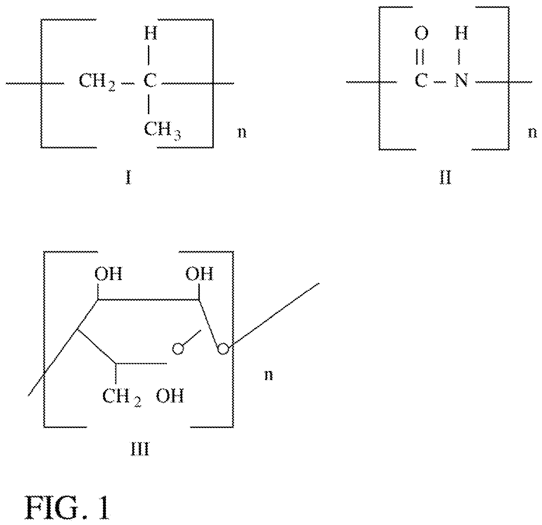

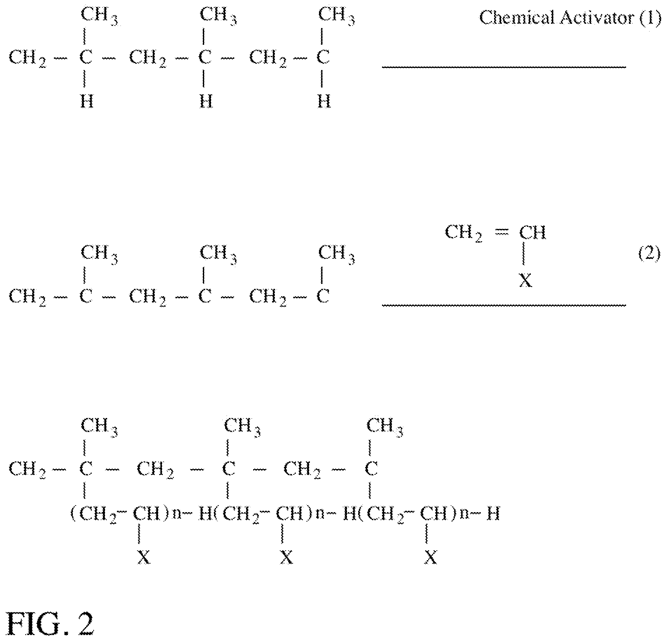

FIG. 1 shows a propylene structure (I) which possesses a tertiary hydrogen that is more reactive than bulk hydrogen atoms. Further, a protein structure (II) and a polysaccharide structure (III) are each shown which possess an amide hydrogen in (II) and a hydroxyl hydrogen in (III) that are each more reactive than bulk hydrogens. The chemical activator of the invention is capable of removing these active hydrogens to initiate the growth of polymer chains at the site from where the active hydrogens are removed. FIG. 2 shows generally the removal of active hydrogens to initiate the growth of polymer chains for a polypropylene substrate, such as for polypropylene reinforcement fiber.

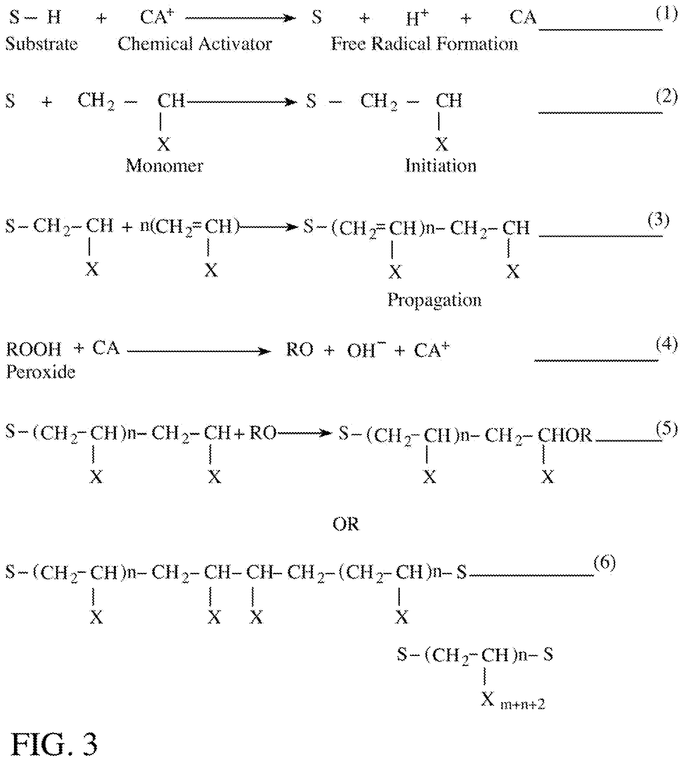

FIG. 3 shows a mechanism of chemical grafting in accordance with certain embodiments of the invention wherein in step (1) the chemical activator CA (e.g., graft initiator), induces radical formation in the substrate S (e.g., reinforcement fiber). In step (2), monomer X is attached to the active site formed by removal of the hydrogen to initiate growth. The selection of X governs the property or properties that are obtained. Optionally, a mixture of monomers are employed, and more than one property of the substrate can be modified or enhanced in a single processing step. In step (3), propagation of the polymer chains on a backbone chain of the substrate S (e.g., reinforcement fiber) is initiated and continues at the reaction sites from where the reactive hydrogen molecules were removed to form a polymeric coating or film. Step (4) illustrates that the graft initiator can be optionally regenerated. The process then may be terminated by radical combination as shown in reaction steps (5) and (6). As shown in FIG. 3, n and m are integers defining subunit number, and can be the same or different.

In the chemical grafting process, the grafting initiator prepares the surface of the reinforcement fiber substrate such that the substrate is receptive to the graft. As discussed, the graft initiator exposes active sites on the surface of the reinforcement fiber to initiate the grafting process. Application of the graft initiator to the outer surface of the reinforcement fiber can be accomplished by conventional techniques known in the art such as, for example, spraying, rolling or dipping. The graft initiator can be applied at ambient temperatures and normal atmospheric conditions. In certain embodiments, the film/coating formed by the graft initiator can be air dried and in certain other embodiments, the film/coating can be dried using heat or an energy source, such as UV or infrared light. The monomer and/or prepolymer component is then applied at least partially to the outer surface of the graft initiator coating/film to form a treatment coating/film on the reinforcement fiber substrate. The thickness of each of the graft initiator coating/film and the treatment coating/film can vary, and can depend on the specific components selected for use in the coating composition and/or the particular substrate on which it is being applied. The coatings/films formed by chemical grafting can be relatively thin and still provide superior adhesion. In certain embodiments of the invention, the layer thickness is about 0.5 mils. A relatively thin layer is effective to produce the increased adhesion property which is desired. However, there may be certain situations, wherein a thicker layer is needed in order for the increased adhesion property to be realized. In accordance with the invention, the coating composition can be applied in a wide range of thicknesses to accommodate a variety of uses.

The coating compositions of the invention and the coatings formed therefrom may be dried and/or cured. The drying process may include air drying and the curing process may be conducted at room temperature or may include curing at an elevated temperature employing various heat sources known in the art.

In certain embodiments, it may be sufficient to deposit the treatment composition only on the surface of the reinforcement fiber substrate and in certain other embodiments, it may be necessary for the treatment composition to penetrate at least an adequate depth into the substrate or even throughout the substrate in order for the substrate to realize the benefits of the treatment composition.

In general, conventional coatings which are applied to a substrate are adhered to the substrate by simple physical forces which can be easily broken and cause peeling or delamination of the coating. Since, in the invention, the graft initiator creates reaction sites on the reinforcement fiber substrate for free radical polymerization, the reinforcement fiber substrate is receptive to attachment of monomer and/or prepolymer, and the coating or film formed is at least partially chemically bonded, i.e., chemically grafted, to the reinforcement fiber substrate (e.g., the outer surface of the reinforcement fiber). In chemical grafting, the chemical, covalent bonds which bind the layer or film to the substrate produce superior adhesion and reduce or minimize degradation of the treatment.

Furthermore, without intending to be bound by any particular theory, it is believed that as a result of applying the coating composition to the reinforcement fiber, the surface energy of the treated reinforcement fiber is altered or modified (as compared to the surface energy of untreated reinforcement fiber) and causes improved adhesion between the treated reinforcement fibers themselves and between the treated reinforcement fibers and concrete. As such, the treated reinforcement fiber is not easily removable from concrete which is field placed and set.

In certain embodiments, the coating composition can be used to connect one reinforcement fiber substrate to another reinforcement fiber substrate to form a laminated reinforcement fiber. Conventional adhesives that are used for lamination typically fail when temperature changes occur or may fail in shear when the layers constituting the laminate have different coefficients of thermal expansion. The graft initiators used in the invention can be effective to graft di-functional monomers such that one of the carbon-carbon chains will attach itself to one of the substrates at temperature T1 and the other end will do the same at a temperature T2, wherein T2 is higher than T1. It is known that carbon-carbon chains are in the form of a helix which can extend and contract depending on temperature.

In accordance with certain embodiments, the treated reinforcement fibers of the invention are introduced during preparation of concrete, e.g., in a concrete mixture, and prior to it being field placed and set. The treated reinforcement fibers can be introduced into a concrete mixture during various steps and at a variety of locations in the manufacture process. For example, the treated reinforcement fibers can be added in a concrete mixing machine or associated machinery, or in a hopper, or in a transportation vehicle, or after discharge from the mixing machine or associated machinery, or the hopper or the transportation vehicle. The treated reinforcement fibers can be added at these various steps in the process provided that there is sufficient mixing that occurs to adequately incorporate the treated reinforcement fibers into the concrete material.

In addition to the treated reinforcement fibers, compounds used in producing asphalt and portland cement concrete include, but are not limited to, fine and coarse aggregate, such as but not limited to sand and rock, and a binder that holds together the aggregate. The binder is often referred to in the art as cement. Other additives may also be added to the asphalt and portland cement concrete material (for example, in the concrete mixing machine), such as, for example, lime powder. The process of manufacturing asphalt and portland cement concrete can include a batch or continuous process. In the batch process, the treated reinforcement fibers can be added to the mixing chamber, having mixing blades, of the concrete mixing machine prior to introducing aggregate and liquid cement. In the continuous process, wherein a drum mixer is used, treated reinforcement fibers can be added to the process at any time prior to the introduction of liquid cement. The manufacture of asphalt cement concrete consists of a thermal process, and therefore, includes heating the ingredients, such as in the chamber of the concrete mixing machine. The temperature of the concrete can vary and can include those temperatures typically used in commercially-operated concrete manufacturing facilities. In an embodiment of the present invention, the temperature can be within a range of about 100°C to 191°C (212°F to 375°F), or higher than 371°C (700°F).

The treated reinforcement fibers can be added to the asphalt and portland cement concrete mixture in varying amounts. Typically, the amount added is such that desired properties of the concrete are achieved. In certain embodiments, the amount of treated reinforcement fibers added to the asphalt and portland cement concrete mixture can be such that the treated reinforcement fibers constitute at least 10.0 percent or greater by volume per ton of concrete. In certain embodiments, the amount of treated reinforcement fibers can be in a range of from about 0.0001 percent to about 5.0 percent by volume per ton of the concrete.

The treated reinforcement fibers can be incorporated into the manufacture of various asphalt and portland cement concrete building materials and products used for building or construction, such as, for example, structural pavements, airport runways and tarmacs, bridge deck overlays, floors, and pre-cast concrete products. The treated reinforcement fibers may also be used for repair, rehabilitation, retrofit, and renovation of existing products or structures, such as, for example, in overlays, and repairs of airport pavements, bridge decks, parking areas, roadways, and the like, including patching and filling potholes.

In addition to reinforcement, incorporation of the treated reinforcement fibers in, for example, cast asphalt and portland cement concrete, modifies the cracking mechanism and reduces the propagation of micro-cracking caused by shrinkage. Furthermore, the treated reinforcement fibers are capable of carrying a load across the crack. As a result, the asphalt and portland cement concrete may have at least one change in its material properties, such as toughness, residual load carrying ability after the first crack, and impact resistance. Moreover, it is believed that the treated reinforcement fibers can produce asphalt and portland cement concrete having improved strength compared to concrete using non-treated reinforcement fibers, such that the asphalt and portland cement concrete containing treated reinforcement fibers can be suitable for locations where the asphalt and portland cement concrete will experience both high and low temperatures, and areas subjected to heavy loadings (e.g., high traffic areas) and heavy concentrations of truck traffic, as well as many other uses.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended.

### EXAMPLES

### Example 1

The following ingredients were combined in a container to form a liquid reinforcement fiber treatment/coating composition in accordance with certain embodiments of the invention.

| Ingredient Name | Parts by Weight |
|---|---|
| Flurosurfactant APES-70S | 0.50 |
| Water | 400.00 |
| Hardlen EW 8511 | 100.00 |
| Titanium IV tris aminoethyl amion ethanol DR44 | 4.00 |
| Diethylene glycol monobutylether | 10.0 |
| Alkoxylated tri acrylate SR9035 | 2.00 |
| Sodium vinyl suflfonate | 0.50 |
| Polyethylene glycol dimethacrylate SR 344 | 0.50 |
| Ureaperoxide 1% solution in water | 0.50 |
| Styrene/acrylate copolymer pliotec SA40 | 25.00 |
| Silver perchlorate 0.1% solution in water | 0.10 |

### Example 2

The following ingredients were combined in a container to form a liquid reinforcement fiber treatment/coating composition in accordance with certain embodiments of the invention.

| Ingredient Name | Parts by Weight |
|---|---|
| Flurosurfactant FC 4430 | 0.50 |
| Water | 400.00 |
| Modified polyolefin Advantis 510W | 125.00 |
| Titanium IV ros propenolate methyl amino ethanol LICA 97 WE50 DR44 | 45.00 |
| Diethylene glycol monobutylether | 10.0 |
| Monomer sodium vinyl suflfonate | 1.00 |
| Alkoxylated urethane acrylate SR 9035 | 0.50 |
| Monomer Silane A1120 | 0.50 |
| Ureaperoxide 1% solution in water | 0.50 |
| Silver perchlorate 0.1% solution in water | 0.10 |
| Acrylic prepolymer Acrygeon DV 300 | 30.00 |

### Example 3

The following ingredients were combined in a container to form a liquid reinforcement fiber treatment/coating composition in accordance with certain embodiments of the invention.

| Ingredient Name | Parts by Weight |
|---|---|
| Flurosurfactant APFS-70S | 0.50 |
| Water | 400.00 |
| Modified polyolefin Hardlen EW8511 | 80.00 |
| Modified polyolefin Advantis 510W | 40.00 |
| Titanium IV, trisamino ethyl amno ethanol amine DR44 | 5.00 |
| Diethylene glycol monobutylether | 10.00 |
| Monomer sodium vinyl suflfonate | 2.00 |
| Urethane acrylate SR 9035 | 0.50 |
| Polyethylene glycol 400 dimethacrylate SR344 | 0.50 |
| Styrene acrylate pliotec SA 40 | 30.00 |
| Ureaperoxide 1% solution in water | 0.20 |
| Ferrous hemmonium sulfate 1% solnion water | 0.10 |

A plurality of reinforcement fibers were immersed in each of the formulations identified in Examples 1, 2 and 3 in order to at least partially coat and treat the fibers. The treated fibers were subjected to heat curing at a temperature of about 80°C for about ten minutes. The treated and cured fibers were then mixed with concrete compositions.

## Claims

1. A treated reinforcement fiber for use in an asphalt or portland cement concrete composition, the treated reinforcement fiber comprising:
a reinforcement fiber selected from a polyolefin fiber, a polyamide fiber, and an aramid fiber; and
a monomer and/or polymer coating formed on an outer surface of the reinforcement fiber by chemical grafting where a graft initiator is applied or deposited on the outer surface of the reinforcement fiber as a graft initiator coating/film, the graft initiator being adapted to expose active sites on the outer surface of the reinforcement fiber, monomers and/or prepolymers are then applied to the outer surface of the graft initiator coating/film to form a treatment coating/film on the reinforcement fiber, the monomers and/or prepolymers, linked by carbon-carbon bonds, attach to the active sites, followed by chain propagation whereby monomer and/or polymer branches are formed;
wherein the coating is chemically grafted to the reinforcement fiber;
wherein the monomer and/or prepolymer comprises at least one functional group selected from the group consisting of hydroxyl, carboxyl, amino and ester;
wherein the graft initiator comprises metallic salt;
wherein the monomer is selected from the group comprising urethane monomer, acrylic monomer, vinyl monomer and mixtures thereof; and
wherein the prepolymer is selected from the group comprising urethane prepolymer, acrylic prepolymer, vinyl prepolymer and mixtures thereof.

2. The treated reinforcement fiber of claim 1, wherein the graft initiator is selected from the group consisting of silver nitrate, silver perchlorate, ferrous ammonium sulfate, titanium and mixtures thereof.

3. A reinforced asphalt and portland cement concrete composition, comprising:
a plurality of treated reinforcement fibers according to any preceding claim;
aggregate; and
binder.

4. A method of treating a reinforcement fiber having an outer surface and selected from a polyolefin fiber, a polyamide fiber, and an aramid fiber, the method comprising:
applying graft initiator to the outer surface of the reinforcement fiber as a graft initiator coating/film;
applying to the outer surface of the graft initiator coating/film a component selected from the group consisting of monomer, prepolymer and mixtures thereof, to form a treated reinforcement fiber with a monomer and/or polymer coating formed on the outer surface of the reinforcement fiber by chemical grafting where the graft initiator exposes active sites on the outer surface of the reinforcement fiber and the monomers and/or prepolymers, linked by carbon-carbon bonds, attach to the active sites, followed by chain propagation whereby monomer and/or polymer branches are formed;
wherein said coating is chemically grafted to the reinforcement fiber;
wherein the component comprises at least one functional group selected from the group consisting of hydroxyl, carboxyl, amino, ester and mixtures thereof;
wherein the graft initiator comprises metallic salt;
wherein the monomer is selected from the group comprising urethane monomer, acrylic monomer, vinyl monomer and mixtures thereof; and
wherein the prepolymer is selected from the group comprising urethane prepolymer, acrylic prepolymer, vinyl prepolymer and mixtures thereof.

5. The method of claim 4, wherein the graft initiator is in the form of a solution.

6. The method of claim 4, wherein the component further comprises catalyst.

7. The method of claim 6, wherein the catalyst is selected from the group consisting of peroxide acid, perbenzoate and mixtures thereof.

8. The method of claim 4, wherein the graft initiator is present in an amount of from 5 ppm to 10 ppm based on total weight of the component.

9. The method of claim 4, wherein the graft initiator is selected from the group consisting of silver nitrate, silver perchlorate, ferrous ammonium sulfate, titanium and mixtures thereof.

## Patentansprüche

1. Behandelte Verstärkungsfaser zur Verwendung in einer Asphalt- oder Portlandzementbetonzusammensetzung, wobei die behandelte Verstärkungsfaser umfasst:
eine Verstärkungsfaser, ausgewählt aus einer Polyolefinfaser, einer Polyamidfaser und einer Aramidfaser; und
eine Monomer- und/oder Polymerbeschichtung, die auf einer äußeren Oberfläche der Verstärkungsfaser durch chemisches Pfropfen gebildet wird, wobei ein Pfropfinitiator auf die äußere Oberfläche der Verstärkungsfaser als Pfropfinitiator-Beschichtung/-Film aufgebracht oder abgeschieden wird, wobei der Pfropfinitiator dafür ausgelegt ist, aktive Stellen auf der äußeren Oberfläche der Verstärkungsfaser freizulegen, wonach Monomere und/oder Vorpolymere auf die äußere Oberfläche der Pfropfinitiatorbeschichtung/des Pfropfinitiatorfilms aufgebracht werden, um auf der Verstärkungsfaser eine Behandlungsbeschichtung/einen Behandlungsfilm zu bilden, und sich Monomere und/oder Vorpolymere, verknüpft durch Kohlenstoff-Kohlenstoff-Bindungen, an die aktiven Stellen anlagern, gefolgt von Kettenfortpflanzung, wobei Monomer- und/oder Polymerzweige gebildet werden;
wobei die Beschichtung chemisch auf die Verstärkungsfaser aufgepfropft ist;
wobei das Monomer und/oder Vorpolymer mindestens eine funktionelle Gruppe umfasst, ausgewählt aus der Gruppe, die aus Hydroxyl, Carboxyl, Amino und Ester besteht;
wobei der Pfropfinitiator Metallsalz umfasst;
wobei das Monomer ausgewählt wird aus der Gruppe, die Urethanmonomer, Acrylmonomer, Vinylmonomer und Gemische daraus umfasst; und
wobei das Vorpolymer ausgewählt wird aus der Gruppe, die Urethanvorpolymer, Acrylvorpolymer, Vinylvorpolymer und Gemische daraus umfasst.

2. Behandelte Verstärkungsfaser nach Anspruch 1, wobei der Pfropfinitiator ausgewählt wird aus der Gruppe, die aus Silbernitrat, Silberperchlorat, Ammoniumeisen(II)-sulfat, Titan und Gemischen daraus besteht.

3. Verstärkte Asphalt- und Portlandzementbetonzusammensetzung, umfassend:
eine Vielzahl von behandelten Verstärkungsfasern nach einem vorstehenden Anspruch;
Zuschlagstoff; und
Bindemittel.

4. Verfahren zum Behandeln einer Verstärkungsfaser, die eine äußere Oberfläche aufweist und aus einer Polyolefinfaser, einer Polyamidfaser und einer Aramidfaser ausgewählt wird, wobei das Verfahren umfasst:
Aufbringen von Pfropfinitiator auf die äußere Oberfläche der Verstärkungsfaser als Pfropfinitiator-Beschichtung/-Film;
Aufbringen einer Komponente, ausgewählt aus der Gruppe, die aus Monomer, Vorpolymer und Gemischen daraus besteht, auf die äußere Oberfläche der Pfropfinitiator-Beschichtung/des Pfropfinitiator-Films, um eine behandelte Verstärkungsfaser mit einer durch chemisches Pfropfen auf der äußeren Oberfläche der Verstärkungsfaser gebildeten Monomer- und/oder Polymerbeschichtung zu bilden, wobei der Pfropfinitiator aktive Stellen auf der äußeren Oberfläche der Verstärkungsfaser freilegt und die Monomere und/oder Vorpolymere, durch Kohlenstoff-Kohlenstoff-Bindungen verknüpft, an den aktiven Stellen anhaften, worauf eine Kettenfortpflanzung folgt, wobei Monomer- und/oder Polymerzweige gebildet werden;
wobei die Beschichtung chemisch auf die Verstärkungsfaser aufgepfropft ist;
wobei die Komponente mindestens eine funktionelle Gruppe umfasst, ausgewählt aus der Gruppe, die aus Hydroxyl, Carboxyl, Amino, Ester und Gemischen daraus besteht;
wobei der Pfropfinitiator Metallsalz umfasst;
wobei das Monomer ausgewählt wird aus der Gruppe, die Urethanmonomer, Acrylmonomer, Vinylmonomer und Gemische daraus umfasst; und
wobei das Vorpolymer ausgewählt wird aus der Gruppe, die Urethanvorpolymer, Acrylvorpolymer, Vinylvorpolymer und Gemische daraus umfasst.

5. Verfahren nach Anspruch 4, wobei der Pfropfinitiator in Form einer Lösung vorliegt.

6. Verfahren nach Anspruch 4, wobei die Komponente weiter einen Katalysator umfasst.

7. Verfahren nach Anspruch 6, wobei der Katalysator ausgewählt wird aus der Gruppe, die aus Peroxidsäure, Perbenzoat und Gemischen daraus besteht.

8. Verfahren nach Anspruch 4, wobei der Pfropfinitiator in einer Menge von 5 ppm bis 10 ppm, basierend auf das Gesamtgewicht der Komponente, vorliegt.

9. Verfahren nach Anspruch 4, wobei der Pfropfinitiator ausgewählt wird aus der Gruppe, die aus Silbernitrat, Silberperchlorat, Ammoniumeisen(II)-sulfat, Titan und Gemischen daraus besteht.

## Revendications

1. Fibre de renfort traitée destinée à être utilisée dans une composition d'asphalte ou de béton de ciment Portland, la fibre de renfort traitée comprenant :
une fibre de renfort sélectionnée parmi une fibre de polyoléfine, une fibre de polyamide et une fibre d'aramide ; et
un revêtement de monomère et/ou de polymère formé sur une surface externe de la fibre de renfort par greffage chimique, où un initiateur de greffage est appliqué ou déposé sur la surface externe de la fibre de renfort sous la forme d'un revêtement/film d'initiateur de greffage, l'initiateur de greffage étant conçu pour exposer des sites actifs sur la surface externe de la fibre de renfort, des monomères et/ou des prépolymères sont ensuite appliqués sur la surface externe du revêtement/film d'initiateur de greffage pour former un revêtement/film de traitement sur la fibre de renfort, les monomères et/ou les prépolymères, liés par des liaisons carbone-carbone, se fixent aux sites actifs, suivi d'une propagation en chaîne de telle sorte que des ramifications de monomère et/ou de polymère sont formées ;
dans laquelle le revêtement est greffé chimiquement à la fibre de renfort ;
dans laquelle le monomère et/ou le prépolymère comprennent au moins un groupe fonctionnel sélectionné dans le groupe consistant en hydroxyle, carboxyle, amino et ester ;
dans laquelle l'initiateur de greffage comprend un sel métallique ;
dans laquelle le monomère est sélectionné dans le groupe comprenant un monomère d'uréthane, un monomère acrylique, un monomère vinylique et des mélanges de ceux-ci ; et
dans laquelle le prépolymère est sélectionné dans le groupe comprenant un prépolymère d'uréthane, un prépolymère acrylique, un prépolymère vinylique et des mélanges de ceux-ci.

2. Fibre de renfort traitée selon la revendication 1, dans laquelle l'initiateur de greffage est sélectionné dans le groupe consistant en le nitrate d'argent, le perchlorate d'argent, le sulfate ferreux ammoniacal, le titane et des mélanges de ceux-ci.

3. Composition d'asphalte et de béton de ciment Portland renforcés, comprenant :
une pluralité de fibres de renfort traitées selon une quelconque revendication précédente ;
des granulats ; et
un liant.

4. Procédé de traitement d'une fibre de renfort présentant une surface externe et sélectionnée parmi une fibre de polyoléfine, une fibre de polyamide et une fibre d'aramide, le procédé comprenant :
l'application d'un initiateur de greffage sur la surface externe de la fibre de renfort sous la forme d'un revêtement/film d'initiateur de greffage ;
l'application, sur la surface externe du revêtement/film d'initiateur de greffage, d'un composant sélectionné dans le groupe consistant en un monomère, un prépolymère et des mélanges de ceux-ci, pour former une fibre de renfort traitée avec un revêtement de monomère et/ou de polymère formé sur la surface externe de la fibre de renfort par greffage chimique, où l'initiateur de greffage expose des sites actifs sur la surface externe de la fibre de renfort et les monomères et/ou les prépolymères, liés par des liaisons carbone-carbone, se fixent aux sites actifs, suivi d'une propagation en chaîne de telle sorte que des ramifications de monomère et/ou de polymère sont formées ;
dans lequel ledit revêtement est greffé chimiquement à la fibre de renfort ;
dans lequel le composant comprend au moins un groupe fonctionnel sélectionné dans le groupe consistant en hydroxyle, carboxyle, amino, ester et des mélanges de ceux-ci ;
dans lequel l'initiateur de greffage comprend un sel métallique ;
dans lequel le monomère est sélectionné dans le groupe comprenant un monomère d'uréthane, un monomère acrylique, un monomère vinylique et des mélanges de ceux-ci ; et
dans lequel le prépolymère est sélectionné dans le groupe comprenant un prépolymère d'uréthane, un prépolymère acrylique, un prépolymère vinylique et des mélanges de ceux-ci.

5. Procédé selon la revendication 4, dans lequel l'initiateur de greffage est sous la forme d'une solution.

6. Procédé selon la revendication 4, dans lequel le composant comprend en outre un catalyseur.

7. Procédé selon la revendication 6, dans lequel le catalyseur est sélectionné dans le groupe consistant en un peracide, un perbenzoate et des mélanges de ceux-ci.

8. Procédé selon la revendication 4, dans lequel l'initiateur de greffage est présent en une quantité de 5 ppm à 10 ppm sur la base du poids total du composant.

9. Procédé selon la revendication 4, dans lequel l'initiateur de greffage est sélectionné dans le groupe consistant en le nitrate d'argent, le perchlorate d'argent, le sulfate ferreux ammoniacal, le titane et des mélanges de ceux-ci.
